# EUROPEAN PATENT APPLICATION

(11) **EP 1 864 843 A2**
(43) Date of publication of application: **12.12.2007**
(21) Application number: 07108107.9
(22) Date of filing: 14.05.2007
(51) Int. Cl.: B60K 7/00, B60L 11/12, B60L 11/18

(54) **Four-wheel rolling vehicle with electric drive**

(30) Priority: 14.05.2006 IT MI20060976
(71) Applicant: PIAGGIO & C. S.p.A., 56025 Pontedera (Pisa) (IT)
(72) Inventor: Masut, Lucio, 56030 S. Pietro Belvedere (Pisa) (IT); Santucci, Mario Donato, 55044 Marina di Pietrasanta (Lucca) (IT)
(74) Representative: De Gregori, Antonella

(57) **Abstract**

Four-wheel electric-drive rolling vehicle (10) with front steering wheels (11) connected to a chassis (12) by means of an articulated quadrilateral front suspension group (15) and rear wheels (14) connected to said chassis (12) by means of independent, longitudinal arm suspensions (16), comprising at least a pair of electric driving motors (21), an electric motor for each of the front wheels (11) respectively, and/or an electric motor for each of the rear wheels (14), said motors (21) being fed by at least one electric accumulator group (22), through electric wire connections and at least one control board (23).

## Description

The present invention relates to a four-wheel rolling vehicle with an electric drive.

In the description, the term rolling will refer to the characteristic of the vehicle of oscillating around a longitudinal axis with respect to the vehicle itself, said oscillation being referred to with the term rolling.

Four-wheel rolling vehicles capable of combining the characteristics of motorcycles, in terms of handiness, with the properties of stability and braking typical of four-wheel vehicles, are being studied by the Applicant, as a result of their advantages in terms of active safety due to their design and consequent motion dynamics.

In this respect, the Applicant has already developed an innovative, four-wheel rolling vehicle, object of the PCT patent application published with the number WO 2005/058680 A1, equipped with two front steering wheels and two drive rear wheels, said front wheels being equipped with a suspension group consisting of at least two horizontal crossbars connected to the chassis of the vehicle, and at least two suspensions, independent from each other and constrained to the two crossbars, so as to form an articulated quadrilateral which allows the rolling of the vehicle, said back wheels being, on the contrary, equipped with independent longitudinal arm suspensions, also constrained to the chassis, so as to allow the rolling of the vehicle.

Thanks to the particular solutions developed for allowing the vehicle to roll, still maintaining the contact of all its wheels with the ground, the four-wheel rolling vehicle object of WO 2005/058680 A1, is particularly reliable and safe, as its stability is guaranteed for any running and ground conditions.

With reference to the different driving solutions available for ground transportation vehicles, regardless of the number of wheels, it is also known that, depending on the position of the drive with respect to the vehicle, the transfer of weights and therefore the balance of the motor vehicle, particularly during acceleration and braking, influences the dynamic behaviour of the vehicle, according to different modes.

To oppose the driving or braking torque during acceleration, in fact, the reaction resulting on the axes shifts towards the rear part of the vehicle, whereas during braking the opposite happens. This means that in a front-wheel drive vehicle, during acceleration, the front portion tends to become lighter, with a consequent decrease in the load on the front-drive wheels which are more often than not also the steering wheels, with the consequence that, especially for high acceleration or on slippery roads, the wheels can loose adherence and the vehicle tends to veer towards the outside of the curve.

On the contrary, a rear-wheel drive vehicle (generally used in the case of two-wheel vehicles, motorbikes and motorcycles in particular) has opposite problems of roadhold in curves, i.e. as a consequence of a strong acceleration, or even a blander acceleration but immediately after braking (with the load that has moved towards the front of the vehicle), it can happen that the rear part of the vehicle tends to veer, with a consequent loss of control on the part of the driver.

Vehicles in which the driving force is distributed on all the wheels, called four-wheel drive vehicles, have been developed in order to overcome these problems relating to vehicles with only front- or rear- wheel drive, in particular to facilitate driving over rough road surfaces, with a high slope or poor adherence.

Continuing with the analysis of drive systems of the known type, it is also known that, for each pair of driving wheels on the same axis, a differential system is necessary, i.e. a mechanic organ capable of equitably distributing the torque moment between the two wheels, leaving them free to rotate at a different angular velocity, in order to prevent one or both wheels from slipping in curves, wherein the outer wheel must rotate at a higher speed with respect to the inner wheel as it has to cover a curved path having a greater length, the rolling radiuses being the same.

At least two differentials must be present in four-wheel drive vehicles (a front one and a rear one) possibly plus a third in the centre to distribute the power between the front and rear axes. A vehicle without an intermediate differential could not circulate on asphalted roads, as a slight difference in the average speed of the front and rear wheels would cause a torsion on the transmission which would damage the vehicle. For this reason, a drive is present on integral four-wheel vehicles for disconnecting the four-wheel drive. This problem, on the other hand, does not arise on rough surfaces and dirt roads, in which the speed differences are absorbed by the sliding of the wheels on ground with a low friction coefficient.

A great help for ensuring driving safety on four-wheel vehicles, on the other hand, is to provide them with an integral drive; this also applies to four-wheel rolling vehicles, as described in WO 2005/058680 A1, provided the drive system is capable, as already described in the case of integral four-wheel drive vehicles of the traditional type, of guaranteeing suitable distribution of the torque moment between the drive wheels belonging to the front torque or rear torque respectively, analogously to or better than what is normally obtained with a mechanism of the mechanical differential type.

In order to achieve this purpose, in the case of a rolling vehicle, a series of production problems must be solved, due to the different architecture of the chassis and in particular the specific articulated quadrilateral configuration of the front suspensions, which combines, in a single mechanism, the suspension movements, rolling and steering, as well as the longitudinal arm suspension system independent of the back wheels, which do not allow the use of the same movement differential transmission expedients adopted in the case of integral drive motor vehicles of the non-rolling type.

The opportunity of providing said four-wheel rolling vehicles with an integral drive system equipped with "driving torque control" which, with respect to those used in four-wheel vehicles of the traditional type, guarantees greater flexibility of use and mechanical production simplicity, is evident.

An objective of the present invention is therefore to solve the problems of the known art by providing a four-wheel rolling vehicle with an integral electric drive equipped with an electric motor for each wheel, capable of guaranteeing the appropriate distribution of the torque moment between the drive wheels respectively belonging to the front torque or rear torque and distributing the torque between the front and rear axes, in order to provide the maximum drive in complete safety on any surface and under any condition of use.

A further objective of the present invention is to provide a four-wheel rolling vehicle with an integral electric drive having extreme structural and functional simplicity.

These and other objectives are achieved by the four-wheel rolling vehicle with an integral electric drive according to the present invention which has the characteristics of the enclosed claim 1.

Further characteristics and advantages of the present invention will appear more evident from the present description provided for illustrative and nonlimiting purposes, with reference to the enclosed drawings, in which:
- figure 1 shows a schematic front view of a front suspension group of a four-wheel rolling vehicle with an integral electric drive, according to the present invention;
- figure 2 shows a schematic plan view of the rear portion of a four-wheel rolling vehicle with an integral electric drive, according to the present invention;
- figure 3 shows a schematic plan view of the rear portion of a rolling vehicle of figure 2, with a feeding system according to a first embodiment of the present invention;
- figure 4 shows a schematic plan view of the rear portion of a rolling vehicle of figure 2, with a feeding system according to a second embodiment of the present invention;
- figure 5 shows a schematic plan view of the rear portion of a rolling vehicle of figure 2, with a feeding system according to a third embodiment of the present invention; and
- figure 6 shows a schematic plan view of the rear portion of a rolling vehicle of figure 2, with a feeding system according to a fourth embodiment of the present invention.

With reference to the figures, a four-wheel rolling vehicle with an integral electric drive, indicated as a whole with 10, according to a preferred embodiment of the present invention, is equipped with two front steering wheels 11, a chassis 12, handlebars 13, two rear wheels 14, a front suspension group 15 for the front wheels 11 and independent longitudinal arm suspensions 16 for the rear wheels 14. In particular, the front suspension group 15 consists of an upper crossbar 17 connected to the chassis 12 of the vehicle by means of a hinge 18 in correspondence with its half, two lower crossbars 19 connected to an end of the chassis 12 of the vehicle by means of hinges 20 and at least two suspensions 20 independent of each other and constrained above one to each end of the upper crossbar 17 and below to the respective lower crossbar 19, so as to form an articulated quadrilateral which allows the rolling of the vehicle.

This solution allows the vehicle to have two front guiding wheels in parallel, steering and inclinable, so that it can be guided like a motorcycle (front part inclinable - rolling movement - together with the rear). As the front steering system can roll with respect to the rear part, the front wheels can in turn be inclined like the back wheels, always remaining in contact with the ground, however, and therefore guaranteeing a greater adherence to the road surface.

As already mentioned, the characteristic of the vehicle according to the present invention consists in providing each wheel, both the front wheels 11 and the back wheels 14, with a corresponding electric motor 21, housed in the hub of the wheel (whose dimensions are, if necessary, suitably increased to guarantee the necessary space in its interior).

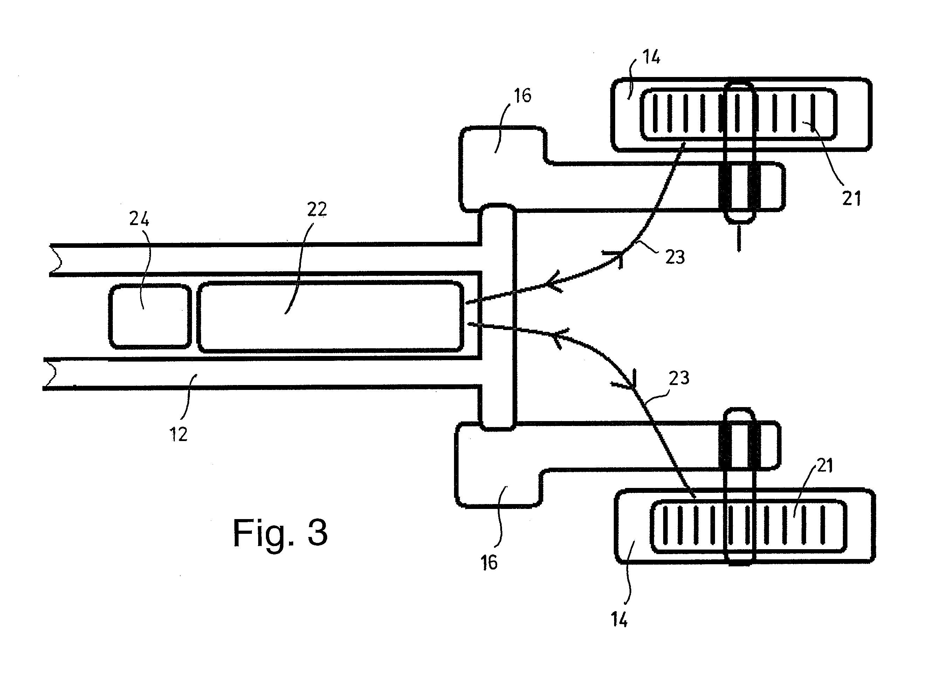

With reference in particular to figure 3, which for the sake of simplicity only shows the rear part of the vehicle 10, an electric accumulator group 22 is also installed on board the vehicle 10, which can consist for example of batteries based on Pb, Pb-gel, Ni-Mh, Li-Ion, with or without the combination of supercondensers. The electric accumulator group 22 feeds, through electric connections 23 and by means of a suitable electronic control board 24, possibly functionally divided into sub-control boards, assisted by on-board commands, the electric motor groups 21 installed in each of the four wheels, both the front wheels 11 and the back wheels 14. The transmission of the driving torque is therefore directed on the four wheels.

The electric accumulator group 22, housed inside the chassis 12 of the four-wheel rolling vehicle, can be extracted to allow transportation and recharging "at home". Alternatively, the recharging can be effected without extraction of the electric accumulator 22, or "on site", by means of a battery-charger (not shown) on- or not on-board, possibly also housed inside the chassis 12 and equipped with a wire with a plug for connection to the electric power supply or, more generally, to an electric energy source.

It is evident how the solution of the present invention allows, through the control effected by the electronic board 24, possibly functionally divided into sub-control boards, the single running of each of the electric motors 21 installed in each of the four wheels, consequently being able to obtain higher performances in terms of driving safety of the vehicle.

Furthermore, through a speed and acceleration sensor system (not shown), connected on the one hand to the single wheels and on the other to the electronic board 24, possibly functionally divided into sub-control boards, it is possible to check at any moment the adherence condition of the single wheel.

Consequently, in the case of veering during acceleration, revealed on one or more of the front wheels 11 or back wheels 14, the control board 24 and/or its sub-control boards can intervene by directly limiting the torque supplied by the motor or corresponding motors, re-establishing the adherence conditions.

In the case of veering during braking, revealed on one or more wheels, the control board 24 and/or its sub-control boards can intervene by directly increasing the torque supplied by the motor or corresponding motors, re-establishing the adherence conditions with the same pressure of the braking plant. In this sense, therefore, the electronic management of the motors is offered as an aid and/or alternative to the known ABS system (present or absent on the vehicle).

Furthermore, by installing on board the vehicle one or more accelerometers and/or gyroscopes (not shown), it is possible to check at any moment the yaw movement of the vehicle itself and compare it with the geometric inclination and steering angle, to obtain a possible shifting from the trajectory desired by the driver. In the case of a revealed shifting, the electronic control board 24 acts directly or through its sub-control boards on the torque supplied by the electric motors 21, in order to recuperate the correct angular yaw velocity.

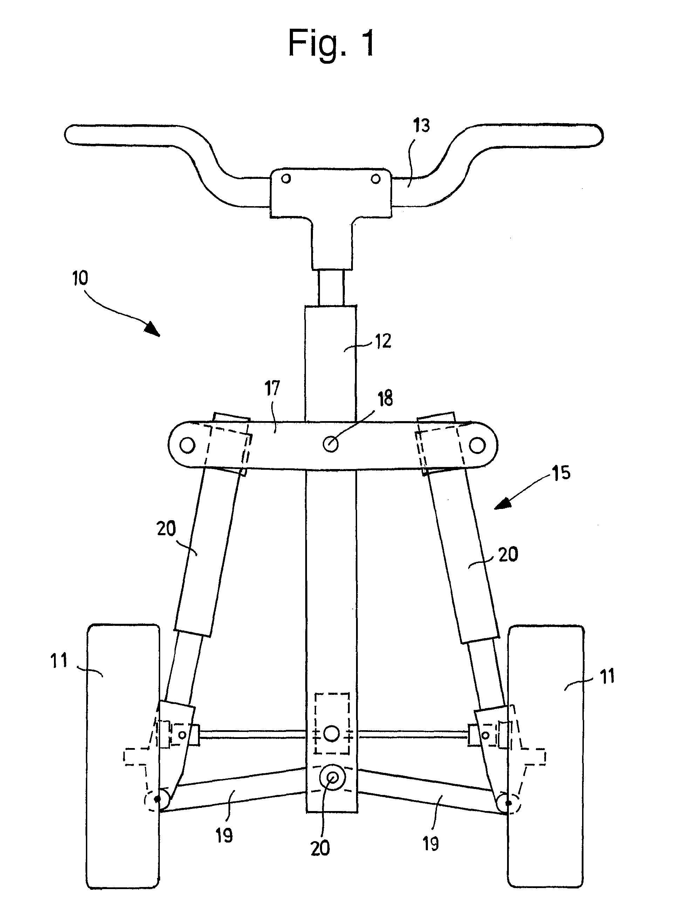

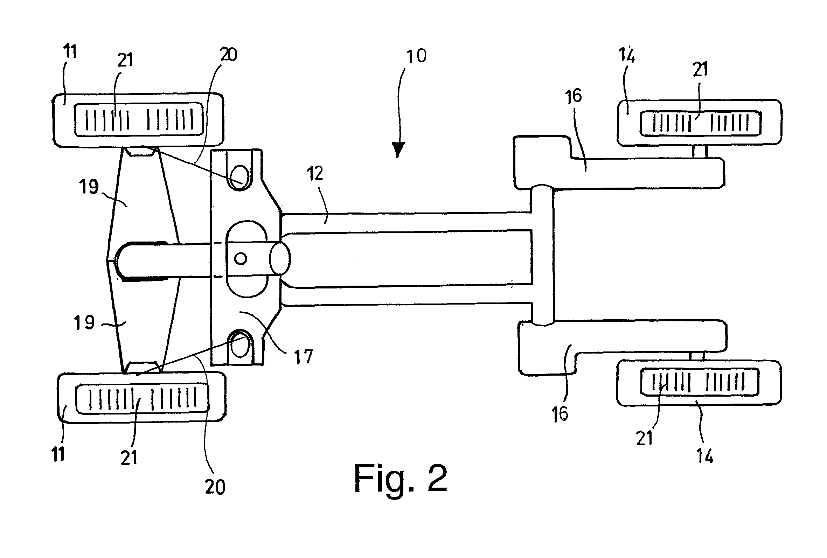

In addition to the embodiment described with reference to figures 1-3, in which there is an electric motor 21 for each of the wheels of the vehicle, an alternative embodiment is also envisaged in which the motors are alternatively present only on the two front wheels 11 or only on the rear wheels 14.

If the wheels are all equipped with a motor, they can however be used upon the command of the driver in pairs, the front wheels only, the back wheels only or all together.

The selection of the drive mode depends on various factors: performances required, autonomy and adherence. The triggering of the integral drive is conveniently reserved for particular driving situations which, thanks to a selector (not shown), can be selected by the driver of the vehicle. The drive on all wheels generally privileges performances and motility and is always advisable under low adherence conditions, but it can in any case be established on the basis of personal considerations of the driver.

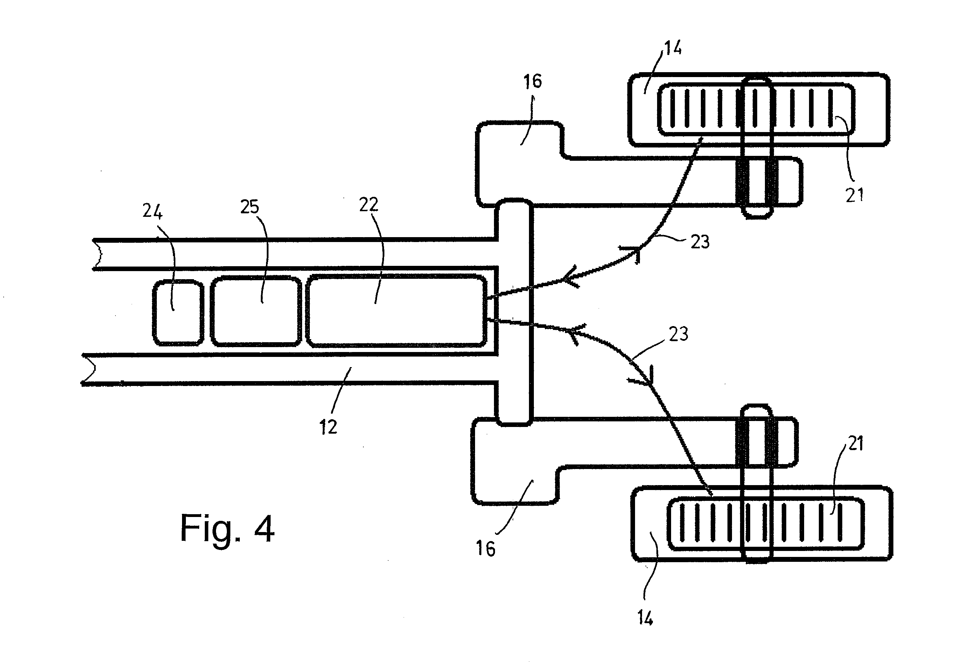

With reference to figure 4, this shows an alternative embodiment of the vehicle of the present invention, in particular aimed at increasing the autonomy of the vehicle. According to this embodiment, in fact, the presence of an internal combustion engine 25 is envisaged, functioning under stationary or semi-stationary regime conditions or in any case suitable for maintaining the correct electric energy balance on-board the vehicle, as generator for recharging the electric accumulators 22. This solution creates a drive system called "thermal/electric serial hybrid", with electric motors 21 fed by electric accumulators, the accumulator group 22 being recharged by the internal combustion engine 25 according to recharging cycles depending on the condition of the batteries themselves and type of use to which the vehicle 10 is subjected, according to logics predefined and activated by the control board 24 and/or the sub-control boards.

The internal combustion engine 25 can be fed with different fuels, such as gasoline for motor vehicles, gas oil, methane, gaseous hydrogen, LPG, alcohol.

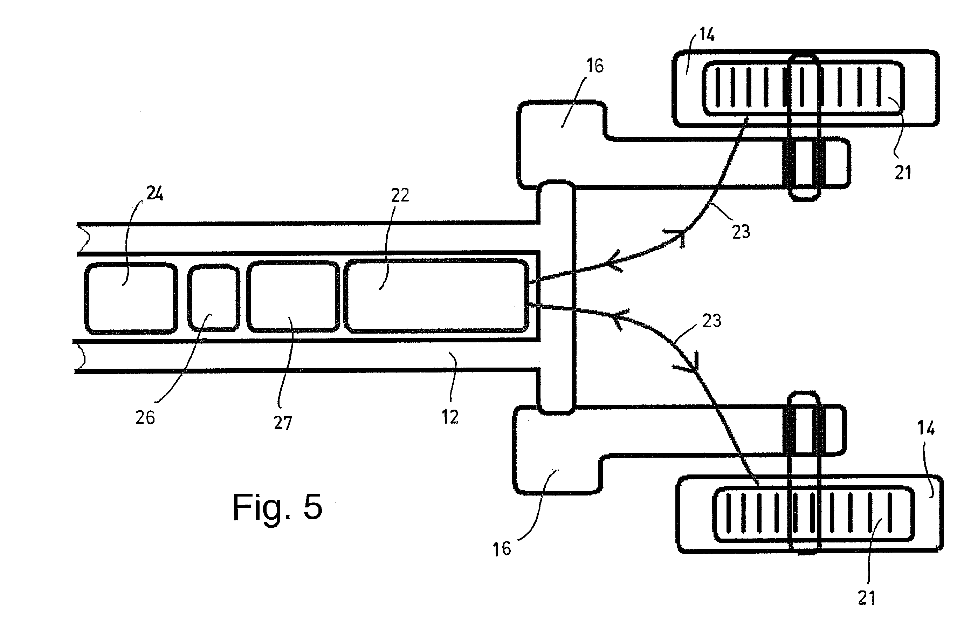

Furthermore, with reference to figure 5, this shows a further embodiment, particularly aimed at increasing the autonomy of the vehicle 10, obtained using a turbogas motor, of which the disk wheel 26 and alternator/generator 27 are schematized. The turbogas motor, when operating under stationary or semi-stationary regime or in any case suitable for maintaining the correct electric energy balance on-board the vehicle, acts as generator for the recharging of the electric accumulators 22. This solution creates a drive system called "turbogas/electric serial hybrid", with electric motors fed through the electric accumulator group 22, as in the case already described. In this case, the accumulator group 22 is then recharged by the turbogas motor according to recharging systems depending on the condition of the batteries themselves and type of use to which the vehicle is subjected, according to logics predefined and activated by the control board 24 and/or the sub-control boards.

The turbogas motor can be projected to be fed by different types of fuel, such as kerosene, gasoline for motor vehicles, gas oil, methane, LPG, alcohol.

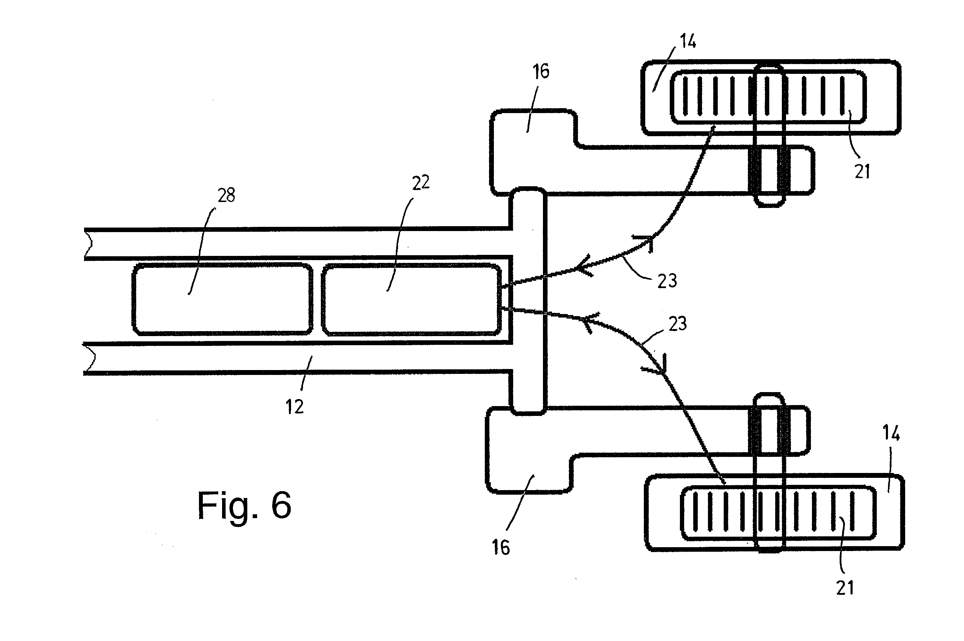

A further embodiment of the vehicle 10 aimed at increasing the autonomy of the vehicle is shown in figure 6 and envisages the use of one or more fuel cells 28 as generator for the recharging of the electric accumulators: this solution creates a system called "fuel cell electric drive", with electric motors 21 fed by the electric accumulator group 22 as in the cases already described.

Compressed gaseous hydrogen or hydrogen adsorbed on metallic hydrides, or other types of specific fuels for fuel cells, can be used as feeding.

According to all the alternative embodiments previously illustrated, it is possible to assemble a super- condenser in parallel with the accumulator group 22, in order to effectively handle sudden requests for electric power (for example during acceleration) which could damage or not be handled by the batteries.

These embodiments also allow to use the vehicle in the "electric" mode only, momentarily deactivating the recharging unit of the batteries for any reason. It is also possible to use the recharging unit of the batteries also when the vehicle is at a standstill and with the burglar alarm inserted (mechanical and/or electric and/or electronic), in order to recharge the accumulator group 22 during stops and/or during parking, when allowed.

The four-wheel rolling vehicle thus conceived can undergo numerous modifications and variants, all included in the invention; furthermore all the details can be substituted by technically equivalent elements. In practice, the materials used, as also the dimensions, can vary according to the technical requirements.

## Claims

1. A four-wheel electric-drive rolling vehicle (10) with front steering wheels (11) connected to a chassis (12) by means of an articulated quadrilateral front suspension group (15) and rear wheels (14) connected to said chassis (12) by means of independent, longitudinal arm suspensions (16), **characterized in that** it comprises at least a pair of electric driving motors (21), an electric motor for each of the front wheels (11), and/or an electric motor for each of the rear wheels (14), respectively, said motors (21) being fed by at least one electric accumulator group (22), through electric connections (23).

2. The four-wheel rolling vehicle (10) with an electric drive according to claim 1, **characterized in that** said electric motors (21) are housed in the hubs of the wheels (11, 14) .

3. The four-wheel rolling vehicle (10) with an electric drive according to claim 1, **characterized in that** said at least one electric accumulator group (22) can be extracted to allow transportation and recharging "at home".

4. The four-wheel rolling vehicle (10) with an electric drive according to claim 1, **characterized in that** it comprises at least one battery-charger for the recharging of said at least one electric accumulator group (22) "on site".

5. The four-wheel rolling vehicle (10) with an electric drive according to claim 1, **characterized in that** it comprises at least one electronic board (24), possibly functionally divided into sub-control boards, for the electric drive control, of the energy flow and recharging of each electric motor (21).

6. The four-wheel rolling vehicle (10) with an electric drive according to claim 5, **characterized in that** said control board (24), possibly functionally divided into sub-control boards, is connected to speed and acceleration sensors, connected to the single wheels (11, 14) to check their adherence conditions, at any moment.

7. The four-wheel rolling vehicle (10) with an electric drive according to claim 5, **characterized in that** said board and/or sub boards are connected to one or more accelerometers and/or gyroscopes to check the yaw movement of the vehicle at any moment and compare it with the geometric inclination and steering angle, to obtain the possible shifting from the trajectory desired by the driver.

8. The four-wheel rolling vehicle(10) with an electric drive according to claim 1, **characterized in that** it comprises four electric motors (21), one for each wheel, and a selector for the use of the motors of the front wheels alone (11), the back wheels (14) alone or contemporaneously all the electric motors (21).

9. The four-wheel rolling vehicle (10) with an electric drive according to claim 1, **characterized in that** it also comprises an internal combustion engine (25), functioning under stationary or semi-stationary regime or in any case suitable for maintaining the correct electric energy balance on-board the vehicle, as generator for recharging the electric accumulators (22).

10. The four-wheel rolling vehicle (10) with an electric drive according to claim 9, **characterized in that** said internal combustion engine (25) can be fed with different fuels, such as gasoline for motor vehicles, gas oil, methane, gaseous hydrogen, LPG, alcohol.

11. The four-wheel rolling vehicle (10) with an electric drive according to claim 1, **characterized in that** it also comprises a turbogas motor, functioning under stationary or semi-stationary regime or in any case suitable for maintaining the correct electric energy balance onboard the vehicle, as generator for recharging the electric accumulators (22).

12. The four-wheel rolling vehicle (10) with an electric drive according to claim 11, **characterized in that** it can be fed with different fuels, such as kerosene, gasoline for motor vehicles, gas oil, methane, LPG, alcohol.

13. The four-wheel rolling vehicle (10) with an electric drive according to claim 1, **characterized in that** it also comprises one or more fuel cells (28), as generator for the recharging of the electric accumulators (22).

14. The four-wheel rolling vehicle (10) with an electric drive according to claim 13, **characterized in that** it can be fed with different fuels, such as compressed gaseous hydrogen, or hydrogen adsorbed on metallic hydrides.

15. The four-wheel rolling vehicle (10) with an electric drive according to claim 1, **characterized in that** it also comprises a supercondenser, situated in parallel to the accumulator group (22).
